# EUROPEAN PATENT SPECIFICATION

(11) **EP 2 985 856 B1**
(45) Date of publication and mention of the grant of the patent: **30.09.2020**
(21) Application number: 13881792.9
(22) Date of filing: 06.08.2013
(51) Int. Cl.: H02J 7/02, H02J 7/00

(54) **USB CHARGING SYSTEM WITH VARIABLE CHARGING VOLTAGE, CHARGER, AND INTELLIGENT TERMINAL**
USB-LADESYSTEM MIT VARIABLER LADESPANNUNG, LADEVORRICHTUNG UND INTELLIGENTES ENDGERÄT
SYSTÈME DE CHARGE USB À TENSION DE CHARGE VARIABLE, CHARGEUR ET TERMINAL INTELLIGENT

(30) Priority: 12.04.2013 CN 201310126487
(43) Date of publication of application: 17.02.2016
(73) Proprietor: Huizhou TCL Mobile Communication Co., Ltd., Guangdong 516006 (CN)
(72) Inventor: ZHAO, Shiqing, HuiZhou Guangdong 516006 (CN); LUO, Dexiang Edward, HuiZhou Guangdong 516006 (CN); HU, Xuelong Ronald, HuiZhou Guangdong 516006 (CN)
(74) Representative: Brachmann, Roland W.
(86) International application number: PCT/CN2013/080885
(87) International publication number: WO 2014/166182

(56) References cited:
- EP-A1- 1 691 252
- CN-A- 101 997 253
- CN-A- 102 055 229
- CN-A- 102 975 627
- CN-A- 103 208 850
- CN-Y- 201 197 034
- US-A- 5 884 086
- US-A1- 2013 054 983
- US-B1- 6 334 793
- US-B1- 7 447 922
- US-B2- 7 159 132

## Description

The present invention relates to the field of charging technologies, and particularly to a universal serial bus (USB) charging system with a variable charging voltage, a charger, and a smart terminal.

Smart phones, smart tablet computers and other smart terminals are more and more popular with young consumers, and at present, almost everyone has a smart terminal. In order to improve user experience, display screens of smart terminals become larger, with more powerful functions, and a higher CPU processing speed, but all these changes cause the smart terminals to consume more power. In order to solve the problem, an approach of increasing battery capacity is generally adopted at present, to extend standby time of the smart terminals. However, another problem may arise: due to an increase in the battery capacity, charging time becomes longer, which also leads to poor user experience.

US 7 447 922 B1 discloses a method and system for supplying power to a host via a USB port. The power is transmitted to the host using the standard VBUS and GND lines that are part of standard USB cables and connectors. The peripheral device includes a special USB descriptor block. During the standard enumeration process, the host reads this USB descriptor block and recognizes that the device can provide power to the host. A set feature command is used to start the power transmission to the host. Particularly, described is a charging system, comprising a charger and a smart terminal, wherein the charger comprises a first USB interface; a power supply; a transistor switch configured to connect an output of the power supply to the VBUS end of the first USB interface; and a first control module, configured to control, according to level states of a positive data line end and a negative data line end of the first USB interface, the power supply to select one of the output voltages while a charging current output by the charger is constant; the first control module being connected to the switch, the power supply, and the D+ end, the D- end, and the VBUS end of the first USB interface; and the smart terminal comprises: a battery; a second USB interface electrically connectable to the first USB interface; a battery charging circuit; a processor; and a transceiver connected the D+ and D- ends of the second USB interface. The processor controls the battery charging circuit, sends data and commands out on the second USB interface via the transceiver and receives information from the second USB interface via the transceiver.

US 7 159 132 B2 discloses a USB device for performing communications with a second device through a USB interface while supplying electric power to the second device through a power-source supplying line in the USB interface. The USB device includes a communication unit for communicating with the second device, a power source capable of outputting electric power of a voltage being different from a standard power voltage prescribed in the standards of the USB interface. The power source supplies the electric power to the second device through the power-source supplying line. The second device includes a low load unit and a high load unit The power source supplies the electric power having a power voltage higher than the standard power voltage to the high load unit through the power-source supplying line.

US 6 334 793 B1 discloses a USB interface provided for the communication of standard USB signaling and non-standard USB signaling, which may be alternate voltage signals. The chassis within data processing devices operable for receiving such an enhanced USB connector into an enclosed enhanced USB receptacle provide a keying configuration so that the standard USB connector portion is not matable with the non-standard USB portion.

US 2013/054983 A1 discloses methods of and apparatus for controlling power drawn by an appliance through a USB port. The method includes limiting any electrical current drawn by an appliance to one of seven levels according to whether the data lines receive a bias from a power line, the data lines are in electrical communication with each other, and the power source includes a host computing device, or according to logic and voltage levels of the data lines when any of the pull-down resistor and the current and voltage sources are connected or not connected to the D+ data line. The apparatus includes a controller programmed to selectively connect a pull-down resistor, a current source, and a voltage source to a D+ data line and to limit any electrical current drawn from a power source to one of the seven levels according to voltage levels on the D+ data line and a D- data line.

CN 201 197 034 Y discloses a power socket, in particular to a USB power socket, which comprises a USB power supply and a panel, wherein the panel is provided with a plurality of USB jacks, the USB jacks are respectively connected with the output end of a USB power supply, and a charging state indicator light is respectively arranged beside each USB jack. The utility model also comprises a USB power selection switch, wherein the USB power selection switch is arranged on the panel and is used for selecting the output voltage of the USB power supply. The power supply socket can synchronously charge a plurality of USB interface devices due to the fact that the USB jacks are arranged, can also select 3V, 5V or 12V of different output voltages by utilizing the USB power selection switch, so that a plurality of USB electronic devices are synchronously charged, can be arranged in places such as hotels, retail shops, office buildings, residences, stations, airports and so on, and can synchronously provide charging service for stationary batteries of a plurality of USB portable electronic devices.

US 5 884 086 A discloses that, within a data processing system, such as a personal computer, non-standard, or auxiliary, voltage and current may be supplied to an attached peripheral device along with standard Universal Standard Bus (USB) power and signaling. A communication protocol is enabled between the host system and the peripheral device to permit the peripheral device to communicate its power requirements to the host device so that the host device can switch the proper voltage and current through the USB cable to the peripheral device.

In view of this, the present invention provides a USB charging system with a variable charging voltage, a charger, and a smart terminal.

In view of the deficiencies of the prior art, an objective of the present invention is to provide a USB charging system with a variable charging voltage, a charger, and a smart terminal, so as to solve the problem in the prior art that charging time of a battery is long.

This problem is solved according to the features of the independent claims. Further embodiments result from the depending claims.

In order to achieve the foregoing objective, the present invention uses the following technical solutions:
A charging system, comprising a charger and a smart terminal. wherein the charger comprises: a first USB interface; an AC/DC module, configured to convert AC voltage to DC voltage, and comprising at least two output ends, each configured to output a corresponding one of at least two different charging voltages; a gating module in form of a single-pole multi-throw analog switch, configured to selectively connect one of the output ends of the AC/DC module to a power supply bus (VBUS) end of the first USB interface;; and a first control module, configured to control, according to level states of a positive data line end and a negative data line end of the first USB interface, the gating module to select one of the output ends of the AC/DC module while a charging current output by the charger is constant; the AC/DC module connected to the first control module and being connected to the VBUS end of the first USB interface through the gating module; the first control module being connected to the gating module and the positive data line (D+) end, the negative data line (D-) end, and an identification (ID) end of the first USB interface; and the smart terminal comprises: a battery; a second USB interface electrically connectable to the first USB interface; a charge management module, configured to charge the battery and control a charging voltage curve; and a second control module, configured to monitor a capacity of the battery and a charging current output by the charge management module and control level states of a positive data line end and a negative data line end of the second USB interface according to the capacity of the battery (201) and a charging current output by the charge management module; the charge management module being connected to a power supply end of the second USB interface, the second control module, and a positive terminal of the battery, and a negative terminal of the battery wherein the negative terminal of the battery is grounded; and the second control module being connected to the charge management module, the positive data line end, the negative data line end, and an identification end of the second USB interface.

According to an embodiment, the AC/DC module includes a 5V charging voltage output end; and the first control module is further configured to control the gating module to connect to the 5V charging voltage output end when the positive data line end and the negative data line end are both at a low level.

According to an embodiment, the AC/DC module includes a 9V charging voltage output end; and the first control module is further configured to control the gating module to connect to the 9V charging voltage output end when the positive data line end is at a high level and the negative data line end is at a low level.

According to an embodiment, the AC/DC module includes a 12V charging voltage output end; and the first control module is further configured to control the gating module to connect to the 12V charging voltage output end when the positive data line end is at a low level and the negative data line end is at a high level.

According to an embodiment, the AC/DC module includes a 15V charging voltage output end; and the first control module is further configured to control the gating module to connect to the 15V charging voltage output end when the positive data line end and the negative data line end are both at a high level.

According to an embodiment, the smart terminal includes a smart phone or a tablet computer.

Compared with the prior art, in the charging system, provided in the present invention, at the side of the charger, the gating module is controlled, according to high and low level states of a D+ end and a D- end of a USB interface, to select a corresponding charging voltage end on the AC/DC module, which increases output power of the charger while a charging current output by the charger is constant; at the side of the smart terminal, level states of a D+ end and a D- end of a USB interface thereof are controlled by the second control module, to instruct the charger to output a corresponding voltage, and a charging voltage curve is controlled to be constant by the charge management module, thereby greatly shortening charging time of the battery by increasing input power.

The aforementioned characteristics, features and advantages of the invention as well as the way they are achieved will be further illustrated in connection with the following examples and considerations as discussed in view of the figures.
- FIG. 1: is a structural block diagram of a charger in a USB charging system with a variable charging voltage according to the present invention; and
- FIG.2: is a structural block diagram of a smart terminal in a USB charging system with a variable charging voltage according to the present invention.

A conventional USB charging voltage is +5V, and therefore, charging time of a battery is fixed because a charging voltage and a charging current output by a charger are fixed. A voltage of a VBUS end (power supply end) of a standard USB physical interface is +5V. Because a power supply current of a standard USB physical interface is limited by a USB connector, a connecting wire, and wiring of a printed circuit board (PCB), a maximum value of the power supply current of the standard USB physical interface is limited, and a nominal current is generally 500mA.

In order to improve charging efficiency, the present invention provides a USB charging system with a variable charging voltage, a charger, and a smart terminal, to improve charging power and efficiency by means of a variable charging voltage, so as to shorten charging time.

In order to make the objectives, technical solutions and effects of the present invention clearer, the present invention is further described in detail below with reference to the accompanying drawings and embodiments. It should be understood that, specific embodiments described herein are only intended to explain the present invention, but not to limit the present invention.

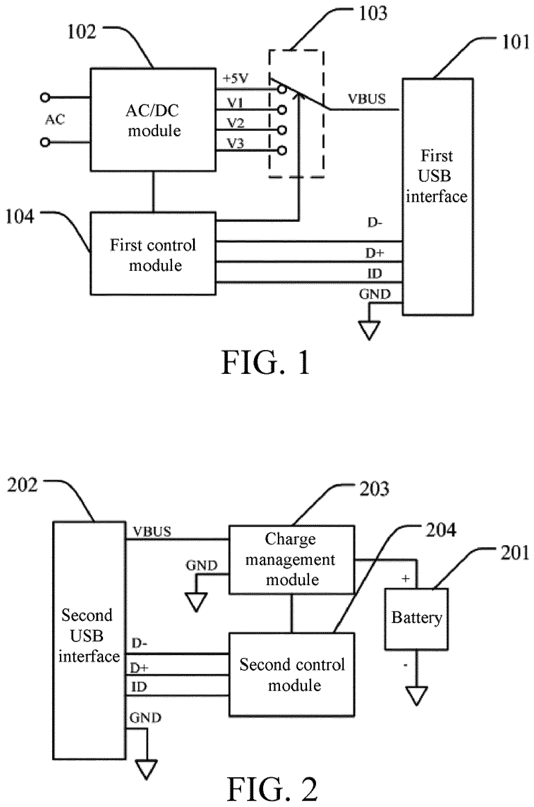

Referring to FIG.1 and FIG.2, FIG.1 is a structural block diagram of a charger in a USB charging system with a variable charging voltage according to the present invention. FIG.2 is a structural block diagram of a smart terminal in a USB charging system with a variable charging voltage according to the present invention.

The USB charging system with a variable charging voltage provided in the present invention includes a charger and a smart terminal. As shown in FIG.1, the charger includes a first USB interface 101, an AC/DC (alternating current to direct current) module 102, a gating module 103 and a first control module 104; the first USB interface 101 has a VBUS end, a D+ end (positive data line end), a D- end (negative data line end), an ID end (identification end) and a GND end (grounding end), where the GND end of the first USB interface 101 is grounded.

The AC/DC module 102 is connected to a power plug (not shown) and the first control module 104, and is further connected to the VBUS end of the first USB interface 101 through the gating module 103, and is configured to convert an AC voltage to a DC voltage, and output at least two charging voltages. In the two charging voltages, one is a voltage of +5V, and the other is a DC voltage greater than 5V.

The gating module 103 is a single-pole multi-throw analog switch, configured to selectively connect to a charging voltage output end of the AC/DC module 102. The first control module 104 is connected to the gating module 103, and the D+ end, the D-end, and the ID end of the first USB interface 101, and is configured to control, according to level states of the D+ end and the D- end of the first USB interface 101, the gating module 103 to selectively connect to a corresponding charging voltage output end.

As shown in FIG.2, the smart terminal includes: a battery 201, a second USB interface 202, a charge management module 203, and a second control module 204; the second USB interface 202 also has a VBUS end, a D+ end, a D- end, an ID end, and a GND end, and the GND end of the second USB interface 202 is grounded.

The charge management module 203 is connected to the VBUS end of the second USB interface 202, the second control module 204, and a positive terminal of the battery 201, and a negative terminal of the battery 201 is grounded; the charge management module 203 is configured to charge the battery 201 and control a charging voltage curve, and specifically, control the charging voltage curve to be constant when the battery 201 is charged.

The second control module 204 is connected to the charge management module 203, and the D+ end, the D- end, and the ID end of the second USB interface 202, and is configured to monitor a charging signal and control level states of the D+ end and the D- end of the second USB interface 202 according to the charging signal. The charging signal includes battery capacity and a charging current output by the charge management module.

During charging, the USB charging system with a variable charging voltage provided in the present invention further includes a USB data line, and the charger is connected to the smart terminal through the USB data line. In specific implementation, the AC/DC module 102 has four charging voltage output ends, which are a 5V charging voltage output end, a 9V charging voltage output end V1, a 12V charging voltage output end V2, and a 15V charging voltage output end V3, respectively. In a default state, the first control module 104 controls the gating module 103 to connect to the 5V charging voltage output end, so as to be compatible with a universal charger. Certainly, the number of output voltage ends and voltage values of the AC/DC module 102 may also be other numbers and values, which may be specifically set according to the battery capacity.

In this embodiment, the AC/DC module 102 has four charging voltage output ends, and the gating module 103 is a single-pole four-throw analog switch correspondingly, so that different charging voltage output ends can be selected. A selection end of the single-pole four-throw analog switch is connected to the first USB interface 101, and a fixed end thereof is connected to the 5V charging voltage output end, the 9V charging voltage output end V1, the 12V charging voltage output end V2, and the 15V charging voltage output end V3 of the AC/DC module 102; a control end of the single-pole four-throw analog switch is connected to the first control module 104.

The present invention achieves charging with a variable charging voltage by using a standard USB physical interface, and improves output power of the charger by increasing the charging voltage while ensuring that a charging current of the charger is within a nominal current range. The increased charging voltage of the charger can be used to control, according to handshake and protocol conditions of the smart terminal and the charger, the selection end of the single-pole four-throw analog switch to connect to the corresponding charging voltage output end, so that a voltage on VBUS of the first USB interface 101 can be a voltage other than +5V, or to be precise, a voltage higher than +5V, for example, +9V, +12V, or +15V.

The charging voltage of the charger is increased, and in the case that the charging current is constant, according to the power calculation formula: P=U×I, where P denotes power, U denotes voltage, and I denotes a charging current output by the charger, in the case that the charging current I is constant, as the voltage output by the charger is increased, the output power P is proportionally increased correspondingly, for example, the voltage is doubled, and on the premise that the current is constant, the power is also doubled.

The voltage provided by the charger passes through the charge management module 203 and then is used to charge the battery 201. According to the law of conservation of energy, due to an increase in input power, after the voltage passes through the charge management module 203, because a charging curve parameter and conversion efficiency of the charge management module 203 are unchanged, the charging current applied to the battery 201 will increase, and the charging time will be shortened due to the increase in the charging current of the battery 201.

According to the law of conservation of energy, the output power of the charger (i.e., input power of the smart terminal) is P1=U1×I1, where P1 denotes the output power of the charger (equal to the input power of the smart terminal), U1 denotes the output voltage of the charger (equal to the input voltage of the smart terminal), and I1 denotes the output current of the charger (equal to the input current of the smart terminal). As output of the charger is connected to the charge management module 203 of the smart terminal, the input power of the charge management module 203 is equal to the output power of the charger, that is, P1=U1×I1.

During charging and power supply, after charge management, and voltage conversion and current conversion on DC/DC voltage, output power of a charge management unit is P2=U2×I2, where P2 denotes the output power of the charge management module 203, and U2 denotes the output voltage of the charge management module 203, that is, the charging voltage of the battery 201, and the charging voltage is controlled by the second control module 204 according to a charging voltage curve, which is executed by the charge management module 203. 12 denotes the output current of the charge management module 203, that is, the charging current of the battery 201, and the charging current is controlled by the second control module 204 according to a charging current curve, which is executed by the charge management module 203.

According to the law of conservation of energy, assuming that energy conversion efficiency of the charge management module 203 is η, P2=P1×η; it can be seen from the formula that, when the conversion efficiency η is constant (as the conversion efficiency η of the charge management module 203 is basically unchanged or changes slightly in the case of high voltage input and in the case of low voltage input), and therefore, when the input power of the charge management module 203 is increased, the output power of the charge management module 203 is also proportionally increased, that is, the charging power is proportionally increased.

It can be known from the above analysis that, if the output voltage U1 of the charger is increased and the output current I1 is increased, the output power P1 of the charger is also increased; when the output current of the charger is constant, if the output voltage U1 of the charger is increased, the output power P1 of the charger is also increased, while the output power of the charger is equal to the input power of the charge management module 203. When the conversion efficiency η of the charge management module 203 is constant, the input power can be increased by increasing the input voltage. It can be known according to the relation P2=P1×η between the output power P2 and input power P1 of the charge management module 203 that, when the conversion efficiency η is constant, if the input power of the charge management module 203 is increased, the output power thereof is also proportionally increased; the present invention increases input power by increasing an input voltage, which is entirely different from the traditional method for increasing power by increasing an output current while keeping a constant input voltage.

After the charger is connected to the smart terminal, an initial voltage of the VBUS end of the charger is +5V, and after the smart terminal detects, through the VBUS end, the connection of the charger, the smart terminal detects a level state of D+/D-. Within first hundreds of milliseconds after the charger is connected to the terminal, a level matching a voltage to be output by the charger is output through D+/D- and is held, where the holding time is about several hundred milliseconds. After detecting the level of D+/D-, the smart terminal waits until the level of D+/D- becomes a low level. At this time, the D+/D- end of the charger turns to be input from output, and the smart terminal sends an acknowledgment signal to the charger according to the received D+/D- level, where the acknowledgement signal is also transmitted through D+/D-. At this time, D+/D- of the USB data line is a time division multiplexing bidirectional signal line. If the smart terminal detects that the level of D+/D- is a preset protocol level, the smart terminal waits until the level of D+/D- becomes a low level, and at this time, the D+/D- end of the charger turns to be input from output, and the smart terminal sends an acknowledgment signal to the charger according to the received D+/D- level, where the acknowledgement signal is also transmitted through D+/D-. The smart terminal outputs a corresponding level to the charger on the D+/D- end, and after the charger detects the acknowledgement signal returned by the smart terminal, it indicates that a handshake between the charger and the smart terminal succeeds, and then the charger starts to output a predetermined voltage to the smart terminal. The present invention achieves setting of the charging voltage, control instructions and the like by using a D+/D- signal of the USB interface, which simplifies the hardware circuit, and saves electronic components.

In the USB charging system with a variable charging voltage of the present invention, setting of the charging voltage, control instructions and the like are achieved by using a D+/D- signal of the USB interface. After the handshake between the charger and the smart terminal succeeds, the charger starts to charge the battery 201. During charging, states of the battery 201 and the charge management module 203 are monitored by the second control module 204, that is, capacity of the battery 201 and a charging current output by the charge management module 203 are monitored by the second control module 204; the D+ end and the D- end of the second USB interface 202 are controlled, according to the states of the battery 201 and the charge management module 203, to correspondingly output high-level and low-level signals.

At this time, as the second USB interface 202 is electrically connected to the first USB interface 101, level states of the D+ ends and D- ends of the two USB interfaces are the same. In order to increase charging efficiency, the first control module 104 controls, according to the level states of the D+ end and the D- end of the first USB interface 101, the gating module 103 to connect to the corresponding charging voltage output end, that is, a voltage output end, which is higher than 5V, of the AC/DC module 102 can be selected.

During specific implementation, when the D+ end and the D- end of the first USB interface 101 are both at a low level, the first control module 104 controls the gating module 103 to connect to the 5V charging voltage output end of the AC/DC module 102; when the D+ end of the first USB interface 101 is at a high level and the D- end is at a low level, the first control module 104 controls the gating module 103 to connect to the 9V charging voltage output end V1 of the AC/DC module 102; when the D+ end of the first USB interface 101 is at a low level and the D- end is at a high level, the first control module 104 controls the gating module 103 to connect to the 12V charging voltage output end V2 of the AC/DC module 102; when the D+ end and the D- end of the first USB interface 101 are both at a high level, the first control module 104 controls the gating module 103 to connect to the 15V charging voltage output end V3 of the AC/DC module 102.

The second control module 204 determines setting of high and low level states of the D+ end and the D- end of the second USB interface 202 according to actual situations of the battery 201. When the capacity of the battery 201 is high (for example, when the capacity exceeds first capacity) and a great charging current (which needs to be greater than a first charging current) is required for charging, the second control module 204 sets both the D+ end and the D- end of the second USB interface 202 to a high level, and instructs the charger to output a charging voltage of 15V to charge the battery 201; if the capacity of the battery 201 of the smart terminal is moderate (for example, between the first capacity and second capacity) and a moderate charging current (for example, between the first charging current and a second charging current) is required for charging, the second control module 204 sets the D+ end of the second USB interface 202 to a low level and the D- end to a high level, and instructs the charger to output a charging voltage of 12V to charge the battery 201; if the capacity of the battery 201 is low (for example, between the second capacity and third capacity) and a small charging current (for example, between the second charging current and a third charging current) is required for charging, the second control module 204 sets the D+ end of the second USB interface 202 to a high level and the D- end to a low level, and instructs the charger to output a charging voltage of 9V to charge the battery 201; if the capacity of the battery 201 is low (for example, less than the third capacity) and a small charging current (for example, less than the third charging current) is required for charging, the second control module 204 sets both the D+ end and the D- end of the second USB interface 202 to a low level, and instructs the charger to output a charging voltage of 5V to charge the battery 201.

Through the above voltage setting, in the case of a constant current, input power of the smart terminal is proportionally increased; the charge management module 203 ensures that the charging current is increased on the premise that the charging voltage curve is constant (that is, the charging voltage is constant), so that charging power is increased, thereby shortening the charging time. In addition, in the present invention, as the charging voltage curve is unchanged, security of the battery 201 will not be affected no matter which voltage is used to charge the battery 201.

The charging system of the present invention comprises a USB charger; the USB charger can output a variable charging voltage, and the USB charger is not described again herein as it has been described above in detail.

Based on the USB charging system with a variable charging voltage, the charging system of the present invention further comprises a smart terminal, including a smart phone or a tablet computer, which can control, according to battery capacity and values of a charging current, a D+ end and a D- end of a USB interface thereof to output corresponding high-level and low-level signals, so as to instruct the charger to output corresponding charging voltages. The smart terminal is not described again herein as it has been described above in detail.

To sum up, according to the present invention, at the side of the charger, the gating module is controlled, according to high and low level states of a D+ end and a D- end of a USB interface, to select a corresponding charging voltage end on the AC/DC module, which increases output power of the charger while a charging current output by the charger is constant; at the side of a smart terminal, a second control module controls level states of a D+ end and a D- end of a USB interface thereof, to instruct the charger to output a corresponding voltage, and a charging voltage curve is controlled to be constant by a charge management module, thereby greatly shortening charging time of the battery by increasing input power.

It should be understood that, persons of ordinary skill in the art can make variations according to the technical solutions and inventive concepts of the present invention, which is defined by the appended claims of the present invention.

## Claims

1. A charging system, comprising a charger (101-104) and a smart terminal (201-204), wherein the charger (101-104) comprises:
- a first universal serial bus, USB, interface (101);
- an AC/DC module (102), configured to convert AC voltage to DC voltage, and comprising at least two output ends, each configured to output a corresponding one of at least two different charging voltages;
- a gating module (103) in form of a single-pole multi-throw analog switch, configured to selectively connect one of the output ends of the AC/DC module (102) to a power supply bus, VBUS, end of the first USB interface (101); and
- a first control module (104), configured to control, according to level states of a positive data line, D+, end and a negative data line, D-, end of the first USB interface (101), the gating module (103) to select one of the output ends of the AC/DC module (102) while a charging current output by the charger is constant;
- the AC/DC module (102) being connected to the first control module (104) and being connected to the VBUS end of the first USB interface (101) through the gating module (103);
- the first control module (104) being connected to the gating module (103), and the D+ end, the D- end, and an identification, ID, end of the first USB interface (101); and
the smart terminal (201-204) comprises:
- a battery (201);
- a second USB interface (202) electrically connectable to the first USB interface (101);
- a charge management module (203), configured to charge the battery (201) and control a charging voltage curve to be constant; and
- a second control module (204), configured to monitor a capacity of the battery (201) and a charging current output by the charge management module (203) and control level states of a D+ end and a D- end of the second USB interface (202) according to the capacity of the battery (201) and a charging current output by the charge management module (203); wherein
- the charge management module (203) is connected to a VBUS end of the second USB interface (202), the second control module (204), and a positive terminal of the battery (201),
- a negative terminal of the battery is grounded (GND); and
- the second control module (204) is connected to the charge management module (203), and the D+ end, the D- end, and an ID end of the second USB interface (202).

2. The charging system according to any of the preceding claims, wherein
- the AC/DC module comprises a 5V charging voltage output end; and
- the first control module is further configured to control the gating module to connect to the 5V charging voltage output end when the D+ end and the D- end are both at a low level.

3. The charging system according to any of the preceding claims, wherein
- the AC/DC module comprises a 9V (V1) charging voltage output end; and
- the first control module is further configured to control the gating module to connect to the 9V charging voltage output end when the D+ end is at a high level and the D- end is at a low level.

4. The charging system according to any of the preceding claims, wherein
- the AC/DC module comprises a 12V (V2) charging voltage output end; and
- the first control module is further configured to control the gating module to connect to the 12V charging voltage output end when the D+ end is at a low level and the D- end is at a high level.

5. The charging system according to any of the preceding claims, wherein
- the AC/DC module comprises a 15V (V3) charging voltage output end; and
- the first control module is further configured to control the gating module to connect to the 15V charging voltage output end when the D+ end and the D-end are both at a high level.

6. The charging system according to any of the preceding claims, wherein the smart terminal comprises a smart phone or a tablet computer.

## Patentansprüche

1. Ladesystem, das eine Ladeeinrichtung (101-104) und ein intelligentes Endgerät (201-204) umfasst, wobei die Ladeeinrichtung (101-104) Folgendes umfasst:
- eine erste Schnittstelle (101) des universellen seriellen Busses, USB-Schnittstelle;
- ein Wechselstrom/Gleichstrom-Modul (102), das konfiguriert ist, eine Wechselspannung in eine Gleichspannung umzusetzen, und mindestens zwei Ausgangsenden umfasst, die jeweils konfiguriert sind, eine entsprechende von mindestens zwei verschiedenen Ladespannungen auszugeben;
- ein Gattermodul (103) in Form eines analogen, einpoligen Mehrfachschalters, der konfiguriert ist, wahlweise eines der Ausgangsenden des Wechselstrom/Gleichstrom-Moduls (102) mit einem Stromversorgungsbus-Ende, VBUS-Ende, der ersten USB-Schnittstelle (101) zu verbinden; und
- ein erstes Steuermodul (104), das konfiguriert ist, das Gattermodul (103) gemäß den Pegelzuständen eines positiven Datenleitungsendes, D⁺-Endes, und eines negativen Datenleitungsendes, D⁻-Endes, der ersten USB-Schnittstelle (101) derart zu steuern, dass es eines der Ausgangsenden des Wechselstrom/Gleichstrom-Moduls (102) auswählt, während ein Ladestrom, der durch die Ladeeinrichtung ausgegeben wird, konstant ist;
- wobei das Wechselstrom/Gleichstrom-Modul (102) mit dem ersten Steuermodul (104) verbunden ist und durch das Gattermodul (103) mit dem VBUS-Ende der ersten USB-Schnittstelle (101) verbunden ist;
- wobei das erste Steuermodul (104) mit dem Gattermodul (103) und dem D⁺-Ende, dem D⁻-Ende und einem Identifikationsende, ID-Ende, der ersten USB-Schnittstelle (101) verbunden ist; und
wobei das intelligente Endgerät (201, 204) Folgendes umfasst:
- eine Batterie (201);
- eine zweite USB-Schnittstelle (202), die mit der ersten USB-Schnittstelle (101) elektrisch verbunden werden kann;
- ein Lademanagementmodul (203), das konfiguriert ist, die Batterie (201) aufzuladen und eine Ladespannungskurve derart zu steuern, dass sie konstant ist; und
- ein zweites Steuermodul (204), das konfiguriert ist, eine Kapazität der Batterie (201) und einen Ladestrom, der durch das Lademanagementmodul (203) ausgegeben wird, zu überwachen und die Pegelzustände eines D⁺-Endes und eines D⁻-Endes der zweiten USB-Schnittstelle (202) gemäß der Kapazität der Batterie (201) und einem Ladestrom, der durch das Lademanagementmodul (203) ausgegeben wird, zu steuern; wobei
- das Lademanagementmodul (203) mit einem VBUS-Ende der zweiten USB-Schnittstelle (202), dem zweiten Steuermodul (204) und einem positiven Anschluss der Batterie (201) verbunden ist,
- ein negativer Anschluss der Batterie mit Masse (GND) verbunden ist; und
- das zweite Steuermodul (204) mit dem Lademanagementmodul (203) und dem D⁺-Ende, dem D⁻-Ende und einem ID-Ende der zweiten USB-Schnittstelle (202) verbunden ist.

2. Ladesystem nach einem der vorhergehenden Ansprüche, wobei
- das Wechselstrom/Gleichstrom-Modul ein Ausgangsende mit einer Ladespannung von 5 V umfasst; und
- das erste Steuermodul ferner konfiguriert ist, das Gattermodul derart zu steuern, dass es mit dem Ausgangsende mit einer Ladespannung von 5 V verbindet, wenn sowohl das D⁺-Ende als auch das D⁻-Ende einen Tief-Pegel aufweisen.

3. Ladesystem nach einem der vorhergehenden Ansprüche, wobei
- das Wechselstrom/Gleichstrom-Modul ein Ausgangsende mit einer Ladespannung von 9 V (V1) umfasst; und
- das erste Steuermodul ferner konfiguriert ist, das Gattermodul derart zu steuern, dass es mit dem Ausgangsende mit einer Ladespannung von 9 V verbindet, wenn das D⁺-Ende einen Hoch-Pegel aufweist und das D⁻-Ende einen Tief-Pegel aufweist.

4. Ladesystem nach einem der vorhergehenden Ansprüche, wobei
- das Wechselstrom/Gleichstrom-Modul ein Ausgangsende mit einer Ladespannung von 12 V (V2) umfasst; und
- das erste Steuermodul ferner konfiguriert ist, das Gattermodul derart zu steuern, dass es mit dem Ausgangsende mit einer Ladespannung von 12 V verbindet, wenn das D⁺-Ende einen Tief-Pegel aufweist und das D⁻-Ende einen Hoch-Pegel aufweist.

5. Ladesystem nach einem der vorhergehenden Ansprüche, wobei
- das Wechselstrom/Gleichstrom-Modul ein Ausgangsende mit einer Ladespannung von 15 V (V3) umfasst; und
- das erste Steuermodul ferner konfiguriert ist, das Gattermodul derart zu steuern, dass es mit dem Ausgangsende mit einer Ladespannung von 15 V verbindet, wenn sowohl das D⁺-Ende als auch das D⁻-Ende einen Hoch-Pegel aufweisen.

6. Ladesystem nach einem der vorhergehenden Ansprüche, wobei das intelligente Endgerät ein Smartphone oder einen Tablet-Computer umfasst.

## Revendications

1. Système de charge comprenant un chargeur (101 à 104) et un terminal intelligent (201 à 204), le chargeur (101 à 104) comprenant :
- une première interface de bus série universel, USB, (101),
- un module de conversion alternatif continu (102) configuré pour convertir une tension alternative en tension continue et comprenant au moins deux sorties, chacune étant configurée pour délivrer en sortie l'une correspondante d'au moins deux tensions de charge,
- un module de déclenchement (103) sous la forme d'un interrupteur analogique unipolaire multivoie configuré pour connecter sélectivement l'une des sorties du module de conversion alternatif continu (102) à la sortie d'un bus d'alimentation, VBUS, de la première interface USB (101), et
- un premier module de commande (104) configuré pour commander, en fonction des niveaux d'une terminaison positive de ligne de données, D+, et d'une terminaison négative de ligne de données, D-, de la première interface USB (101), le module de déclenchement (103) afin de sélectionner l'une des sorties du module de conversion alternatif continu (102) alors que le courant de charge délivré en sortie par le chargeur est constant,
- le module de conversion alternatif continu (102) étant connecté au premier module de commande (104) et étant connecté à la terminaison VBUS de la première interface USB (101) par l'intermédiaire du module de déclenchement (103),
- le premier module de commande (104) étant connecté au module de déclenchement (103) ainsi qu'à la terminaison D+, la terminaison D-, et une terminaison d'identification, ID, de la première interface USB (101), et
le terminal intelligent (201 à 204) comprenant :
- une batterie (201),
- une seconde interface USB (202) pouvant être électriquement connectée à la première interface USB (101),
- un module de gestion de charge (203) configuré pour charger la batterie (201) et pour commander la courbe de tension de charge de sorte à ce qu'elle soit constante, et
- un second module de commande (204) configuré pour surveiller la capacité de la batterie (201) et le courant de charge délivré en sortie par le module de gestion de charge (203) et commander les états des niveaux d'une terminaison D+ et d'une terminaison D- de la seconde interface USB (202) en fonction de la capacité de la batterie (201) et du courant de charge délivré en sortie par le module de gestion de charge (203), où
- le module de gestion de charge (203) est connecté à une terminaison VBUS de la seconde interface USB (202), au second module de commande (204) et à la borne positive de la batterie (201),
- une borne négative de la batterie est mise à la masse (GND), et
- le second module de commande (204) est connecté au module de gestion de charge (203) ainsi qu'à la terminaison D+, la terminaison D- et la terminaison d'identification ID de la seconde interface USB (202).

2. Système de charge selon la revendication précédente, dans lequel :
- le module de conversion alternatif continu comprend une terminaison de sortie de tension de charge de 5 V, et
- le premier module de commande est en outre configuré pour piloter le module de déclenchement pour qu'il établisse une connexion à la terminaison de sortie de tension de charge de 5 V lorsque la terminaison D+ et la terminaison D- sont toutes les deux au niveau bas.

3. Système de charge selon l'une quelconque des revendications précédentes, dans lequel :
- le module de conversion alternatif continu comprend une terminaison de sortie de tension de charge de 9 V (V1), et
- le premier module de commande est en outre configuré pour piloter le module de déclenchement pour qu'il établisse une connexion à la terminaison de sortie de tension de charge de 9 V lorsque la terminaison D+ est au niveau haut et que la terminaison D- est au niveau bas.

4. Système de charge selon l'une quelconque des revendications précédentes, dans lequel :
- le module de conversion alternatif continu comprend une terminaison de sortie de tension de charge de 12 V (V2), et
- le premier module de commande est en outre configuré pour piloter le module de déclenchement pour qu'il établisse une connexion à la terminaison de sortie de tension de charge de 12 V lorsque la terminaison D+ est au niveau bas terminaison D- est au niveau haut.

5. Système de charge selon l'une quelconque des revendications précédentes, dans lequel :
- le module de conversion alternatif continu comprend une terminaison de sortie de tension de charge de 15 V (V3), et
- le premier module de commande est en outre configuré pour piloter le module de déclenchement pour qu'il établisse une connexion à la terminaison de sortie de tension de charge de 15 V lorsque la terminaison D+ et la terminaison D- sont toutes les deux au niveau haut.

6. Système de charge selon l'une quelconque des revendications précédentes, dans lequel le terminal intelligent comprend un téléphone intelligent ou une tablette.
